# EUROPÄISCHE PATENTSCHRIFT

(11) **EP 4 055 350 B1**
(45) Veröffentlichungstag und Bekanntmachung des Hinweises auf die Patenterteilung: **19.02.2025**
(21) Anmeldenummer: 20800549.6
(22) Anmeldetag: 19.10.2020
(51) Int. Cl.: G01D 5/244

(54) **VERFAHREN ZUR ERFASSUNG DER POSITION EINES BEWEGBAREN TEILS UND EIN SYSTEM ZUR DURCHFÜHRUNG DES VERFAHRENS**
METHOD OF DETECTING THE POSITION OF A MOVABLE PART AND SYSTEM FOR CARRYING OUT THE METHOD
PROCÉDÉ DE DÉTECTION DE LA POSITION D'UNE PIÈCE MOBILE ET SYSTÈME DE MISE EN OEUVRE DU PROCÉDÉ

(30) Priorität: 04.11.2019 DE 102019007616
(43) Veröffentlichungstag der Anmeldung: 14.09.2022
(73) Patentinhaber: SEW-EURODRIVE GmbH & Co. KG, 76646 Bruchsal (DE)
(72) Erfinder: MÜLLER, Michael, 76689 Karlsdorf-Neuthard (DE); HEIL, Manuel, 76344 Eggenstein-Leopoldshafen (DE); RÜMMELE, Matthias, 76131 Karlsruhe (DE)
(86) Internationale Anmeldenummer: PCT/EP2020/025464
(87) Internationale Veröffentlichungsnummer: WO 2021/089182

(56) Entgegenhaltungen:
- DE-A1- 102006 043 878
- DE-T2- 60 310 860
- JP-A- 2014 122 885
- JP-A- H0 194 217
- US-A1- 2015 112 634

## Beschreibung

Die Erfindung betrifft ein Verfahren zur Erfassung der Position eines bewegbaren Teils und ein System zur Durchführung des Verfahrens.

Es ist allgemein bekannt, dass für ein Verfahren zur Erfassung der Position eines bewegbaren Teils ein Sensor verwendbar ist.

**Aus der** DE 2015/112634 A1 **ist als nächstliegender Stand der Technik ein Verfahren zur Erfassung der Winkelposition eines drehbar gelagerten Körpers bekannt.**

**Aus der** DE 603 10 860 T2 **ist eine Winkelmesseinrichtung bekannt.**

**Aus der** JP 2014 122885 A **ist eine Motorsteuerung bekannt.**

**Aus der** DE 10 2006043878 A1 **ist eine Motorregelungsvorrichtung bekannt.**

**Aus der** JP H01 94217 A **ist ein Winkelsensor mit automatischer Amplitudenkorrektur.**

Der Erfindung liegt daher die Aufgabe zugrunde, die von einem Sensor zur Winkelerfassung erzeugten Sensorsignale zu korrigieren.

Erfindungsgemäß wird die Aufgabe bei dem Verfahren nach den in Anspruch 1 angegebenen Merkmalen gelöst.

Wichtige Merkmale der Erfindung bei dem Verfahren sind, dass das Verfahren zur Erfassung der Position eines bewegbaren Teils vorgesehen ist, insbesondere zur Erfassung der Winkelposition eines drehbar gelagerten Teils oder zur Erfassung der Linearposition eines linear bewegbar angeordneten Teils, mittels eines Sensors, welcher als die Position codierende Sensorsignale ein erstes Signal, insbesondere Sinussignal, und ein zweites Signal, insbesondere Cosinussignal, aufweist,
wobei die vom Sensor erfasste Position mittels des ersten und zweiten Signals codiert wird,
wobei zeitlich wiederkehrend aus den Sensorsignalen eine Istgröße bestimmt wird,
wobei die Bestimmung eines Stellwerts, insbesondere eines jeweils aktualisierten Stellwerts,
durch ein Triggersignal, insbesondere jeweiliges Triggersignal, insbesondere durch einen Triggerpuls, ausgelöst wird, wobei die Bestimmung des Stellwerts derart ausgeführt wird, dass die Istgröße auf eine Sollgröße hingeregelt wird,
insbesondere wobei der Stellwert erst mit der durch ein jeweiliges weiteres Triggersignal ausgelösten, jeweils nächsten Bestimmung ändert,
insbesondere wobei der durch die durch das Triggersignal ausgelöste Bestimmung bestimmte Stellwert unverändert bleibt bis zum zeitlich nachfolgenden und/oder jeweils weiteren Triggersignal.

Von Vorteil ist dabei, dass die vom Sensor erzeugten Signale, welche die erfasste Position, insbesondere den Winkel, also die Winkellage des Teils, oder die Linearposition des Teils, codieren, auf einen Sollwert hin regelbar sind, ohne dass sicherheitsgerichtete Überwachungen außer Kraft gesetzt werden.

Denn während die erfasste und mittels der Signale codierte Winkellage einen elektrischen Winkel durchläuft wird keine Korrektur ausgeführt, solange eine Mindestzeit t nicht überschritten ist. Somit ist eine sicherheitsgerichtete Überwachung der Sensorsignale in der Lage, einen Fehlerfall zu erkennen. Beispielsweise tritt ein Defekt auf, so dass eines der Signale oder beide Signale an Amplitude verlieren. Dies ist erkennbar, da keine Berichtigung der Signale ausgeführt wird. Erst wenn die elektrische Periode durchlaufen wurde oder die Zeitspanne t abgelaufen ist, wird ein Stellwert bestimmt, der eine Korrektur bewirkt. Dabei ist der Stellwert derart bestimmt, dass der Spitzenwert, insbesondere also Amplitude, der Signale gleich groß ist. Beispielsweise sind die Signale als Sinussignal und Cosinussignal ausgeführt und die Regelung bewirkt, dass der aus Sinussignal und Cosinussignal codierte Zeiger einen Kreis durchläuft, also möglichst geringe Exzentrizität als Abweichung von dem gewünschten Kreis mit gegebenem Radius abweicht.

Somit ist während des Durchlaufens einer elektrischen Periode eine sicherheitsgerichtete Überwachung ausführbar und beim Beginn der nächsten elektrischen Periode ein neuer Stellwert bestimmbar, um beispielsweise Leuchtstärke einer optischen Quelle des Sensors nachzuregeln oder einen empfangsseitigen Verstärkungsfaktor des Sensors nachzuregeln.

Bei einer vorteilhaften Ausgestaltung steuert oder ist der Stellwert eine Erregerspannung oder einen Erregerstrom des Sensors und/oder einen Verstärkungsfaktor des Sensors. Von Vorteil ist dabei, dass eine Nachregelung der Signale in einfacher Weise ermöglicht ist.

Bei einer vorteilhaften Ausgestaltung weist ein Triggersignal dann ausgelöst, wenn die mittels des ersten und zweiten Signals codierte Position sich
- um eine um eine der elektrischen Periode entsprechende Strecke, insbesondere Winkellänge oder lineare Länge,
- und/oder um eine maximale, mittels des ersten und zweiten Signals eineindeutig codierbare Strecke, insbesondere Winkellänge oder lineare Länge,
verändert hat seit dem jeweils zuvor ausgelösten Triggersignal. Von Vorteil ist dabei, dass zwischen zwei Triggersignalen der Stellwert nicht geändert wird und somit eine sicherheitsgerichtete Überwachung der Signale ungestört ausführbar ist.

Bei einer vorteilhaften Ausgestaltung wird ein Triggersignal dann ausgelöst wird, wenn eine Zeitspanne t seit dem jeweils zuvor ausgelösten Triggersignal abgelaufen ist,
insbesondere wobei die Zeitspanne t größer als die Periodendauer des ersten Signals ist, wenn die Drehzahl des Teils derart groß oder maximal ist, dass die Position gerade noch eindeutig erfassbar ist. Von Vorteil ist dabei, dass auch bei Stillstand des Teils zumindest nach Anlauf der Zeitspanne t eine aktualisierte Bestimmung des Stellwerts ausführbar ist.

Bei einer vorteilhaften Ausgestaltung wird die Istgröße als Wurzel aus einer Summe gebildet, welche als Summe des Quadrats des Wertes des jeweils aktuellen ersten Signals und des Quadrats des Wertes des jeweils aktuellen zweiten Signals gebildet wird. Von Vorteil ist dabei, dass ein Radialabstand in einfacher Weise bestimmbar ist, dessen Abszissenwert dem ersten Signal und dessen Ordinatenwert dem zweiten Signal gleicht.

Bei einer vorteilhaften Ausgestaltung wird die Istgröße als Zweiertupel der jeweils aktuell bestimmten Amplitude des ersten Signals und der jeweils aktuell bestimmten Amplitude des zweiten Signals gebildet, wobei die Sollgröße ebenfalls ein Zweiertupel ist und statt des Stellwertes ein Zweiertupel von Stellwerten bestimmt wird. Von Vorteil ist dabei, dass sogar jede der beiden Amplituden der Signale des Sensors separat nachregelbar, also korrigierbar sind.

Erfindungsgemäß wird die Aufgabe, die von einem Sensor zur Winkelerfassung erzeugten Sensorsignale zu korrigieren, auch durch ein System gemäß Anspruch 6 gelöst.

Wichtige Merkmale bei dem System zur Durchführung eines vorgenannten Verfahrens sind, dass das erste und zweite Signal sowohl einer Auswerteeinheit als auch einem Zeitglied und auch einem Messglied zugeführt werden,
wobei die Auswerteeinheit geeignet ausgeführt ist, um eine Istgröße zu bestimmen, insbesondere um einen gleitenden Mittelwert einer Istgröße zu bestimmen,
wobei das Zeitglied geeignet ausgeführt ist, um nach Ablauf einer Zeitspanne t nach dem zuletzt erzeugten Triggersignal ein Triggersignal zu erzeugen,
wobei das Messglied geeignet ausgeführt ist, um nach Durchlaufen einer elektrischen Periode nach dem zuletzt erzeugten Triggersignal ein Triggersignal zu erzeugen,
wobei ein Reglerglied geeignet ausgeführt ist, um eine jeweils durch ein Triggersignal ausgelöste Bestimmung eines aktualisierten Stellwertes auszuführen.

Von Vorteil ist dabei, dass immer nach Durchlaufen einer elektrischen Periode oder Ablauf einer Zeitspanne t ein Triggersignal erzeugt wird, das die Bestimmung eines aktualisierten Stellwertes auslöst. Auf diese Weise wird der Stellwert immer nur nach dem Eintreffen eines neuen Triggersignals bestimmt und somit die sicherheitsgerichtete Überwachung der Signale des Sensors nicht gestört.

Bei einer vorteilhaften Ausgestaltung wird mittels des vom Reglerglied erzeugten, den Stellwert beinhaltenden Ausgangssignals
- der durch ein Leuchtmittel, insbesondere LED, des Sensors fließende Strom und/oder der Verstärkungsfaktor einer das Signal eines lichtempfindlichen Sensorelements auswertenden Einheit des Sensors gesteuert
- oder die Amplitude einer elektrischen Wechselgröße, wie Strom oder Spannung, einer als Primärwicklung fungierenden, stationär angeordneten Wicklung gesteuert, wobei eine Sekundärwicklung mit dem Teil fest verbunden ist.

Von Vorteil ist dabei, dass nach jedem Triggersignal die Leuchtstärke, also Lichtintensität, des Leuchtmittels des Sensors und/oder des empfangsseitig angeordneten, also mit dem Teil fest verbundenen Sensorteils geändert wird, um den Sollwert zu erreichen.

Bei einer vorteilhaften Ausgestaltung die Signale des Sensors einer Einheit zur sicherheitsgerichteten Überwachung zugeführt werden. Von Vorteil ist dabei, dass zwischen den Triggersignalen eine solche Überwachung ausführbar ist und nicht verfälscht wird durch aktualisierte Stellwerte.

Weitere Vorteile ergeben sich aus den Unteransprüchen.

Die Erfindung wird nun anhand von schematischen Abbildungen näher erläutert:

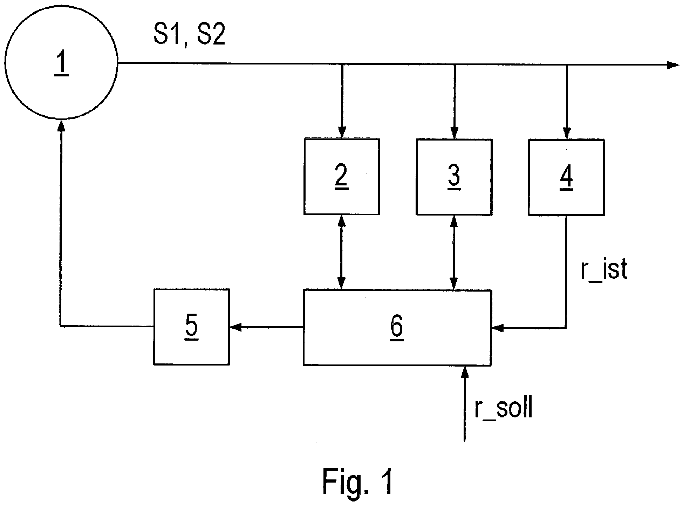

In der Figur 1 ist ein erfindungsgemäßes Verfahren zur Sensorsignalkorrektur schematisch skizziert.

Wie in der Figur 1 gezeigt, erzeugt ein Sensor ein Sinussignal S1 und ein Cosinussignal. Hierzu ist der Sensor 1 ein lineares Wegmesssystem oder Winkelmesssystem zur Erfassung der Position, insbesondere Linearposition oder Winkelposition, eines bewegbaren Teils, insbesondere linear oder rotatorisch bewegbaren Teils.

Beispielsweise wird vom Sensor 1 die Drehwinkelstellung eines drehbar gelagerten Teils erfasst, welches am Umfang in Umfangsrichtung hintereinander angeordnete, voneinander regelmäßig beabstandete Dauermagnete aufweist, die in Umfangsrichtung abwechselnd entgegengesetzt magnetisiert sind. Ein magnetempfindliches, stationär angeordnetes Sensorelement erzeugt somit bei Drehung des Teils ein Sinussignal S1, das eine sogenannte elektrische Periodenlänge L aufweist, welche 720° / N beträgt, wobei N die Anzahl der Dauermagnete am Umfang ist. Ein weiteres Sensorelement, welches im Abstand L/4 in Umfangsrichtung ebenfalls stationär angeordnet ist, erzeugt ein Cosinussignal S2.

Die beiden Signale S1 und S2 werden einer Auswerteeinheit 4 zugeführt, welche daraus eine Istgröße, wie beispielsweise einen Istbetrag R_ist des aus dem Sinussignal S1 und dem Cosinussignal S2 gebildeten Radiusvektors.

Diese Istgröße R_ist wird stets wiederkehrend, insbesondere quasi-kontinuierlich, ermittelt und vorzugsweise geglättet, insbesondere als gleitender Mittelwert oder dergleichen.

Erfindungsgemäß bestimmt das Messglied 3 den zurückgelegten Weg des bewegbar angeordneten Teils und erzeugt ein Triggersignal, wenn die elektrische Periodenlänge L zurückgelegt wurde.

Dieses Triggersignal gibt die Bestimmung eines neuen Stellwertes frei, welcher durch ein Reglerglied 6 bestimmt wird, indem die Istgröße R_ist mit einer vorgegebenen Sollgröße R_soll verglichen wird und ein derartiger Stellwert bestimmt wird, so dass die Istgröße R_ist auf die Sollgröße R_soll hin geregelt wird.

Der nächste Stellwert wird somit erst beim nächsten Triggersignal bestimmt und wirksam.

Auf diese Weise werden phasenabhängige Fehler nicht während des Durchlaufens der elektrischen Periodenlänge L wegkorrigiert, sondern bleiben erkennbar. Der im Beispiel als Wurzel aus der Summe des Quadrats des Sinussignals und des Quadrats des Cosinussignals gebildete und als gleitender Mittelwert bestimmte Radialabstand wird also auf einen Sollwert hin geregelt, wobei der Stellwert aber nur einmal pro elektrische Periode geändert wird.

Zusätzlich zum Messglied 3 ist ein Zeitglied 2 vorgesehen, das ebenfalls ein Triggersignal erzeugen kann. Wenn nämlich die Bewegung des bewegbaren Teils sehr langsam ist, erzeugt das Zeitglied 2 nach einer Zeitspanne t ein Triggersignal, um die Bestimmung des nächsten Stellwertes durch das Reglerglied 6 auszulösen.

Auf diese Weise wird also erfindungsgemäß nur einmal pro elektrische Periode ein Stellwert bestimmt, solange die Geschwindigkeit oder Drehzahl über einem Schwellwert liegt, und ansonsten nach einer Maximalzeit, nämlich der Zeitspanne t.

Der Stellwert steuert eine Erregeramplitude im Sensor 1 oder einen Verstärkungsfaktor im Sensor 1.

Beispielsweise weist der Sensor 1 eine an eine Primärwicklung induktiv gekoppelte Sekundärwicklung auf. Die Primärwicklung wird von einer Primärwechselspannung gespeist, deren Amplitude, also Erregeramplitude, vom Stellwert gesteuert wird. Statt oder zusätzlich ist vom Stellwert ein Verstärkungsfaktor bei der Erzeugung des Sinussignals und/oder des Cosinussignals steuerbar. Auch auf diese Weise ist die Istgröße auf eine Sollgröße, insbesondere auf einen Sollwert, hin regelbar.

Alternativ ist der Sensor als optischer Sensor ausgeführt, wobei eine Lichtquelle stationär angeordnet ist, deren Intensität vom Stellwert gesteuert wird. Statt oder zusätzlich ist vom Stellwert ein Verstärkungsfaktor bei der Erzeugung des Sinussignals und/oder des Cosinussignals steuerbar. Auch auf diese Weise ist die Istgröße auf eine Sollgröße, insbesondere auf einen Sollwert, hin regelbar. Bei Ausführung der Lichtquelle als LED ist die Intensität mittels des durch die LED fließenden Stroms steuerbar.

Bei weiteren erfindungsgemäßen Ausführungsbeispielen ist als Die Istgröße R_ist ein zweier Tupel verwendet, insbesondere das aus der Amplitude des Sinussignals s1 und der Amplitude des Cosinussignals S2 zusammengesetzte Tupel. Die Sollgröße besteht dann auch aus zwei Werten, die aber auch gleich groß sein dürfen. Auch die Stellgröße besteht in diesem Fall aus einem Zweiertupel. Somit werden dann die Amplituden der Sensorsignale (S1, S2) vom Stellwert auf einen jeweiligen, insbesondere gleichen, Sollwert hingesteuert.

### Bezugszeichenliste

1 Sensor
2 Zeitglied
3 Messglied
4 Auswerteeinheit
5 Stellglied
6 Reglerglied

S1 Sinussignal
S2 Cosinussignal
R_ist Istvektor
R-Soll Sollvektor

## Patentansprüche

1. Verfahren zur Erfassung der Position eines bewegbaren Teils, insbesondere zur Erfassung der Winkelposition eines drehbar gelagerten Teils oder zur Erfassung der Linearposition eines linear bewegbar angeordneten Teils, mittels eines Sensors (1), welcher als die Position codierende Sensorsignale ein erstes Signal, insbesondere Sinussignal (S1), und ein zweites Signal, insbesondere Cosinussignal (S2), aufweist,
wobei die vom Sensor (1) erfasste Position mittels des ersten und zweiten Signals codiert wird,
**wobei** zeitlich wiederkehrend aus den Sensorsignalen eine Istgröße (r_ist) bestimmt wird,
wobei die Bestimmung eines Stellwerts, insbesondere eines jeweils aktualisierten Stellwerts,
durch ein Triggersignal, insbesondere jeweiliges Triggersignal, insbesondere durch einen Triggerpuls, ausgelöst wird, wobei die Bestimmung des Stellwerts derart ausgeführt wird, dass die Istgröße auf eine Sollgröße (r_soll) hingeregelt wird,
insbesondere wobei der Stellwert erst mit der durch ein jeweiliges weiteres Triggersignal ausgelösten, jeweils nächsten Bestimmung ändert,
insbesondere wobei der durch die durch das Triggersignal ausgelöste Bestimmung bestimmte Stellwert unverändert bleibt bis zum zeitlich nachfolgenden und/oder jeweils weiteren Triggersignal,
**dadurch gekennzeichnet, dass**
**ein Triggersignal dann ausgelöst wird, wenn die mittels des ersten und zweiten Signals codierte Position sich**
- **um eine der elektrischen Periode** des ersten und zweiten Signals **entsprechende Strecke, insbesondere Winkellänge oder lineare Länge,**
- oder **um eine maximale, mittels des ersten und zweiten Signals eineindeutig codierbare Strecke, insbesondere Winkellänge oder lineare Länge,**
**verändert hat seit dem jeweils zuvor ausgelösten Triggersignal.**

2. Verfahren nach Anspruch 1,
**dadurch gekennzeichnet, dass**
der Stellwert eine Erregerspannung oder einen Erregerstrom des Sensors (1) und/oder einen Verstärkungsfaktor des Sensors (1) steuert oder ist.

3. Verfahren nach einem der vorangegangenen Ansprüche,
**dadurch gekennzeichnet, dass**
ein Triggersignal dann ausgelöst wird, wenn eine Zeitspanne t seit dem jeweils zuvor ausgelösten Triggersignal abgelaufen ist,
insbesondere wobei die Zeitspanne t größer als die Periodendauer des ersten Signals ist,
wenn die Drehzahl des bewegbaren Teils derart groß oder maximal ist, dass die Position gerade noch eindeutig erfassbar ist.

4. Verfahren nach einem der vorangegangenen Ansprüche,
**dadurch gekennzeichnet, dass**
die Istgröße als Wurzel aus einer Summe gebildet wird, welche als Summe des Quadrats des Wertes des jeweils aktuellen ersten Signals und des Quadrats des Wertes des jeweils aktuellen zweiten Signals gebildet wird
oder dass
die Istgröße als Zweiertupel der jeweils aktuell bestimmten Amplitude des ersten Signals und
der jeweils aktuell bestimmten Amplitude des zweiten Signals gebildet wird, wobei die Sollgröße ebenfalls ein Zweiertupel ist und statt des Stellwertes ein Zweiertupel von Stellwerten bestimmt wird.

5. Verfahren nach einem der vorangegangenen Ansprüche,
**dadurch gekennzeichnet, dass**
die Signale des Sensors (1) zwischen jeweils zwei aufeinander folgenden Triggersignalen überwacht werden,
insbesondere wobei bei Veränderung der Spitzenwerte, Amplituden oder des Betrags des durch die beiden Signale codierten Zeigers ein Fehler angezeigt und/oder weitergemeldet wird.

6. System zur Durchführung eines Verfahrens nach einem der vorangegangenen Ansprüche, umfassend eine Auswerteeinheit (4), ein Zeitglied (2), ein Messglied (3) und ein Reglerglied (6), wobei
das erste (S1) und zweite Signal (S2) sowohl der Auswerteeinheit (4) als auch dem Zeitglied (2) und auch dem Messglied (3) zugeführt werden,
wobei die Auswerteeinheit (4) geeignet ausgeführt ist, um die Istgröße (r_ist) zu bestimmen,
insbesondere um einen gleitenden Mittelwert der Istgröße zu bestimmen,
wobei das Zeitglied (2) geeignet ausgeführt ist, um nach Ablauf einer Zeitspanne t nach dem zuletzt erzeugten Triggersignal ein Triggersignal zu erzeugen,
wobei das Messglied (3) geeignet ausgeführt ist, um nach Durchlaufen einer elektrischen Periode des ersten und zweiten Signals nach dem zuletzt erzeugten Triggersignal ein Triggersignal zu erzeugen,
wobei das Reglerglied (6) geeignet ausgeführt ist, um eine jeweils durch ein Triggersignal ausgelöste Bestimmung eines aktualisierten Stellwertes auszuführen,
**dadurch gekennzeichnet, dass**
**das System derart ausgeführt ist, dass ein Triggersignal dann ausgelöst wird, wenn die mittels des ersten und zweiten Signals codierte Position sich**
- **um eine um eine der elektrischen Periode entsprechende Strecke, insbesondere Winkellänge oder lineare Länge,**
- oder **um eine maximale, mittels des ersten und zweiten Signals eineindeutig codierbare Strecke, insbesondere Winkellänge oder lineare Länge,**
**verändert hat seit dem jeweils zuvor ausgelösten Triggersignal.**

7. System nach Anspruch 6,
**dadurch gekennzeichnet, dass**
mittels des vom Reglerglied (6) erzeugten, den Stellwert beinhaltenden Ausgangssignals
- der durch ein Leuchtmittel, insbesondere LED, des Sensors (1) fließende Strom und/oder der Verstärkungsfaktor einer das Signal eines lichtempfindlichen Sensorelements auswertenden Einheit des Sensors (1) gesteuert wird
- oder die Amplitude einer elektrischen Wechselgröße, wie Strom oder Spannung, einer als Primärwicklung fungierenden, stationär angeordneten Wicklung gesteuert wird, wobei eine Sekundärwicklung mit dem bewegbaren Teil fest verbunden ist.

8. System nach Anspruch 6 oder 7,
**dadurch gekennzeichnet, dass**
die Signale des Sensors (1) einer Einheit zur Überwachung zugeführt werden.

## Claims

1. Method for detecting the position of a movable component, in particular for detecting the angular position of a rotatably mounted component or for detecting the linear position of a component arranged in a linearly movable manner, by means of a sensor (1) that comprises, as the sensor signals encoding the position, a first signal, in particular a sine signal (S1), and a second signal, in particular a cosine signal (S2),
wherein the position detected by the sensor (1) is encoded by means of the first and the second signal,
wherein an actual variable (r_ist) is determined from the sensor signals recurrently over time,
wherein the determination of a manipulated value, in particular of a most recently updated manipulated value, is triggered by a trigger signal, in particular each trigger signal, in particular by a trigger pulse, wherein the manipulated value is determined such that the actual variable is controlled towards a target variable (r_soll),
in particular wherein the manipulated value only changes upon each subsequent determination triggered by each further trigger signal,
in particular wherein the manipulated value determined by the determination triggered by the trigger signal remains unchanged until the next trigger signal chronologically and/or each further trigger signal,
**characterised in that**
a trigger signal is triggered when the position encoded by means of the first and the second signal has changed
- by a distance, in particular an angular length or linear length, corresponding to the electrical period of the first and the second signal,
- or by a maximum distance, in particular angular length or linear length, that can be unambiguously encoded by means of the first and the second signal,
since the latest triggered trigger signal.

2. Method according to claim 1,
**characterised in that**
the manipulated value either controls or is an excitation voltage or an excitation current of the sensor (1) and/or a gain factor of the sensor (1).

3. Method according to any of the preceding claims,
**characterised in that**
a trigger signal is triggered when a time period t since the latest triggered trigger signal has elapsed,
in particular wherein the time period t is greater than the period duration of the first signal when the rotational speed of the movable component is either so great or at such a maximum that the position can only just be clearly detected.

4. Method according to any of the preceding claims,
**characterised in that**
the actual variable is generated as the root of a sum that is generated as the sum of the square of the value of the current first signal and the square of the value of the current second signal,
or **in that**
the actual variable is generated as a two-tuple of the currently determined amplitude of the first signal and the currently determined amplitude of the second signal, wherein the target variable is likewise a two-tuple, and a two-tuple of manipulated values is determined instead of the manipulated value.

5. Method according to any of the preceding claims,
**characterised in that**
the signals of the sensor (1) are monitored between each two successive trigger signals,
in particular wherein an error is indicated and/or relayed when the peak values, amplitudes or the magnitude of the phasor encoded by the two signals changes.

6. System for carrying out a method according to any of the preceding claims, comprising an evaluation unit (4), a timer (2), a measuring member (3) and a controller member (6), wherein
the first signal (S1) and the second signal (S2) are supplied to the evaluation unit (4) and also to the timer (2) and the measuring member (3),
wherein the evaluation unit (4) is configured to be suitable for determining the actual variable (r_ist),
in particular for determining a moving average of the actual variable,
wherein the timer (2) is configured to be suitable for generating a trigger signal once a time period t has elapsed following the most recently generated trigger signal,
wherein the measuring member (3) is configured to be suitable for generating a trigger signal once an electrical period of the first and the second signal has been run through following the most recently generated trigger signal,
wherein the controller member (6) is configured to be suitable for carrying out a determination, in each case triggered by a trigger signal, of an updated manipulated value,
**characterised in that**
the system is configured such that a trigger signal is triggered when the position encoded by means of the first and the second signal has changed
- by a distance, in particular an angular length or linear length, corresponding to the electrical period,
- or by a maximum distance, in particular angular length or linear length, that can be unambiguously encoded by means of the first and the second signal,
since the latest triggered trigger signal.

7. System according to claim 6,
**characterised in that**
by means of the output signal that is generated by the controller member (6) and contains the manipulated value,
- the current flowing through a lamp, in particular an LED, of the sensor (1) and/or the gain factor of a unit of the sensor (1) that evaluates the signal of a light-sensitive sensor element is/are controlled,
- or the amplitude of an electrical alternating variable, such as the current or voltage, of an immovably arranged winding acting as the primary winding is controlled, wherein a secondary winding is rigidly connected to the movable component.

8. System according to claim 6 or claim 7,
**characterised in that**
the signals of the sensor (1) are supplied to a monitoring unit.

## Revendications

1. Procédé affecté à la détection de la position d'une pièce mobile, notamment à la détection de la position angulaire d'une pièce montée à rotation ou à la détection de la position linéaire d'une pièce agencée avec mobilité linéaire, au moyen d'un capteur (1) comprenant un premier signal, en particulier un signal sinusoïdal (S1) et un second signal, en particulier un signal cosinusoïdal (S2) en tant que signaux de détection codant ladite position,
la position détectée par ledit capteur (1) étant codée au moyen desdits premier et second signaux,
sachant qu'une grandeur réelle (r_ist) est déterminée avec récurrence temporelle, sur la base desdits signaux de détection,
la détermination d'une valeur de réglage, notamment d'une valeur de réglage respectivement actualisée, étant déclenchée par un signal de déclenchement, notamment un signal respectif de déclenchement, par une impulsion de déclenchement en particulier, ladite détermination de la valeur de réglage étant effectuée de façon telle que la grandeur réelle soit régulée sur une valeur de consigne (r_soll),
sachant notamment que ladite valeur de réglage n'est modifiée que par la détermination respectivement successive, déclenchée par un signal supplémentaire respectif de déclenchement,
sachant notamment que la valeur de réglage, déterminée par ladite détermination déclenchée par ledit signal de déclenchement, demeure inchangée jusqu'à l'apparition du signal de déclenchement succédant dans le temps et/ou du signal supplémentaire respectif de déclenchement,
**caractérisé par le fait**
**qu'**un signal de déclenchement est activé lorsque la position codée au moyen des premier et second signaux s'est modifiée, depuis le signal de déclenchement respectivement activé auparavant,
- d'une distance correspondant à la période électrique desdits premier et second signaux, notamment une longueur angulaire ou une longueur linéaire,
ou
- d'une distance maximale, notamment une longueur angulaire ou une longueur linéaire, pouvant être codée de manière univoque au moyen desdits premier et second signaux.

2. Procédé selon la revendication 1,
**caractérisé par le fait que**
la valeur de réglage pilote une tension d'excitation ou un courant d'excitation du capteur (1) et/ou un facteur d'amplification dudit capteur (1), ou se présente comme cette dernière/ces derniers.

3. Procédé selon l'une des revendications précédentes,
**caractérisé par le fait**
**qu'**un signal de déclenchement est activé lorsqu'un laps de temps t s'est écoulé depuis le signal de déclenchement respectivement activé auparavant,
sachant notamment que ledit laps de temps t excède la durée de la période du premier signal
lorsque la vitesse angulaire de la pièce mobile présente une valeur élevée, ou maximale, telle que la position puisse encore être précisément détectée de manière univoque.

4. Procédé selon l'une des revendications précédentes,
**caractérisé par le fait que**
la grandeur réelle est établie en tant que racine d'une somme formée en tant que somme du carré de la valeur du premier signal respectivement effectif et du carré de la valeur du second signal respectivement effectif ;
ou **par le fait que**
ladite grandeur réelle est établie en tant que tuple à deux occurrences de l'amplitude effective dudit premier signal, respectivement déterminée, et de l'amplitude effective dudit second signal, respectivement déterminée, la grandeur de consigne étant semblablement un tuple à deux occurrences, et un tuple à deux occurrences de valeurs de réglage étant déterminé en substitution à la valeur de réglage.

5. Procédé selon l'une des revendications précédentes,
**caractérisé par le fait que**
les signaux du capteur (1) sont surveillés entre deux signaux respectifs de déclenchement se succédant mutuellement,
sachant notamment qu'une erreur est affichée et/ou retransmise en cas de variation des valeurs de crête, des amplitudes ou de la valeur de l'index codé par les deux signaux.

6. Système dévolu à la mise en oeuvre d'un procédé conforme à l'une des revendications précédentes,
comprenant une unité d'évaluation (4), un organe de temporisation (2), un organe de mesure (3) et un organe de régulation (6),
sachant
que le premier signal (S1) et le second signal (S2) sont délivrés tant à l'unité d'évaluation (4), qu'à l'organe de temporisation (2) et à l'organe de mesure (3),
ladite unité d'évaluation (4) étant adéquatement conçue pour déterminer la grandeur réelle (r_ist),
notamment en vue de déterminer une moyenne glissante de ladite grandeur réelle,
ledit organe de temporisation (2) étant adéquatement conçu pour engendrer un signal de déclenchement après expiration d'un laps de temps t succédant au signal de déclenchement engendré en dernier lieu,
ledit organe de mesure (3) étant adéquatement conçu pour engendrer un signal de déclenchement après franchissement d'une période électrique desdits premier et second signaux, succédant audit signal de déclenchement engendré en dernier lieu,
ledit organe de régulation (6) étant adéquatement conçu pour effectuer une détermination d'une valeur de réglage actualisée, respectivement déclenchée par un signal de déclenchement,
**caractérisé par le fait que**
ledit système est conçu de façon telle qu'un signal de déclenchement soit activé lorsque la position codée au moyen des premier et second signaux s'est modifiée, depuis le signal de déclenchement respectivement activé auparavant,
- d'une distance correspondant à la période électrique, notamment une longueur angulaire ou une longueur linéaire,
ou
- d'une distance maximale, notamment une longueur angulaire ou une longueur linéaire, pouvant être codée de manière univoque au moyen desdits premier et second signaux.

7. Système selon la revendication 6,
**caractérisé par le fait que**
le signal de sortie engendré par l'organe de régulation (6) et renfermant la valeur de réglage
- offre la faculté de piloter le courant circulant par un moyen d'éclairage, notamment par une DEL du capteur (1), et/ou le facteur d'amplification d'une unité dudit capteur (1) évaluant le signal d'un élément de détection photosensible,
- ou offre la faculté de piloter l'amplitude d'une grandeur électrique alternative, telle que le courant ou la tension d'un enroulement à implantation fixe remplissant la fonction d'un enroulement primaire, un enroulement secondaire étant alors relié rigidement à la pièce mobile.

8. Système selon la revendication 6 ou 7,
**caractérisé par le fait que**
les signaux du capteur (1) sont délivrés à une unité dédiée à la surveillance.
